# EUROPÄISCHE PATENTANMELDUNG

(11) **EP 2 333 504 A1**
(43) Veröffentlichungstag der Anmeldung: **15.06.2011**
(21) Anmeldenummer: 10015411.1
(22) Anmeldetag: 08.12.2010
(51) Int. Cl.: G01K 1/08, G01K 7/16, G01K 1/18

(54) **Temperatursensor**

(30) Priorität: 14.12.2009 DE 102009058761
(71) Anmelder: TMC Sensortechnik GmbH, 75015 BRETTEN-Gölshausen (DE)
(72) Erfinder: Gengenbach, Bruno, 78343 Gaienhofen (DE); Radbruch, Jens, 75245 Neilingen (DE)
(74) Vertreter: Mommer, Niels

(57) **Zusammenfassung**

Beschrieben wird ein Temperatursensor mit einem temperaturabhängigen Widerstandselement (1), das zwischen zwei Metallstäben (2, 3) angeordnet ist, und einem Körper (4) aus Kunststoff, mit dem die beiden Metallstäbe (2, 3) umspritzt sind. Erfindungsgemäß ist vorgesehen, dass die Metallstäbe (2, 3) jeweils mit ihren beiden Enden aus dem Kunststoffkörper (4) herausragen.

## Beschreibung

### Beschreibung

Die Erfindung geht aus von einem Temperatursensor mit den im Oberbegriff des Anspruchs 1 angegebenen Merkmalen. Derartige Temperatursensor werden zum Schutz von Elektromotoren, Transformatoren oder anderen elektrischen Komponenten vor Überhitzung benötigt und zu diesem Zweck in deren Gehäuse oder Wicklung eingebaut.

Ein solcher Temperatursensor ist aus der DE 41 17 290 A1 bekannt. Bei dem bekannten Temperatursensor ist zwischen zwei Metallstäben ein NTC- oder PTC-Element als Messwiderstand eingeklemmt und zusammen mit den beiden Metallstäben in einen Kunststoffkörper eingebettet, der ein Außengewinde zum Einschrauben in ein Motorgehäuse aufweist. Der bekannte Temperatursensor ist robust, einfach in ein Motorgehäuse einzubauen, kann kostengünstig hergestellt werden und spricht verhältnismäßig rasch an.

Ein Temperatursensor mit zwei Metallstäben, die mit einem Körper aus Kunststoff umspritzt sind, ist auch aus der DE 41 08 789 A1 bekannt. Bei diesem Temperatursensor sitzt das temperaturabhängige Widerstandselement aber nicht zwischen den Enden der beiden Metallstäbe, sondern ist über Drähte an die durch den Kunststoffkörper hindurchragenden Metallstäbe angeschlossen.

Aufgabe der vorliegenden Erfindung ist es, einen Weg aufzuzeigen, wie ein rasch ansprechender Temperatursensor noch kostengünstiger hergestellt und die Störanfälligkeit noch weiter gesenkt werden kann.

Diese Aufgabe wird durch einen Temperatursensor mit den im Anspruch 1 angegebenen Merkmalen gelöst. Vorteilhafte Weiterbildungen der Erfindung sind Gegenstand der Unteransprüche.

Bei einem erfindungsgemäßen Temperatursensor erstrecken sich die Metallstäbe ausgehend von dem Widerstandselement zu dem Kunststoffkörper hin und durch ihn hindurch. Die Metallstäbe, zwischen deren vorderen Enden das temperaturabhängige Widerstandselement angeordnet ist, ragen mit ihren beiden Enden aus dem Kunststoffkörper heraus. Bei dem erfindungsgemäßen Temperatursensor ist das Widerstandselement deshalb außerhalb von dem Kunststoffkörper angeordnet und kann folglich Temperaturänderungen wesentlich schneller nachvollziehen. Ein erfindungsgemäßer Temperatursensor spricht deshalb sehr rasch an. Das temperaturabhängige Widerstandselement hat einen von seiner Temperatur abhängenden Widerstand und ermöglicht deshalb eine Temperaturüberwachung eines Bauteils, beispielsweise eines Motors.

Die Metallstäbe können an ihrem von dem Widerstand abgewandten Enden zu einem Steckverbinder geformt sein oder für eine Kontaktierung mittels Schneidklemmtechnik oder SMD ausgebildet sein.

Das temperaturabhängige Widerstandselement kann von einer mineralischen Schutzmasse, beispielsweise Zement, umschlossen sein. Bei Bedarf kann das Widerstandselement auf diese Weise vor schädlichen Umwelteinflüssen geschützt werden. Wegen der im Vergleich zu Kunststoffen guten Wärmeleitfähigkeit mineralischer Werkstoffe kann deshalb auch ein geschütztes Widerstandselement Änderungen der Umgebungstemperatur vorteilhaft rasch nachvollziehen.

Das temperaturabhängige Widerstandselement ist bevorzugt ein PTC-Element, insbesondere ein keramisches PTC-Element. Derartige PTC-Elemente, beispielsweise auf Basis von Bariumtitanat zeigen bei einer kritischen Temperatur eine sprunghafte Erhöhung des elektrischen Widerstands und sind deshalb hervorragend geeignet, eine kritische Temperaturerhöhung eines Bauteils, beispielsweise eines Motors, zu erkennen. Als temperaturabhängiges Widerstandselement kann beispielsweise auch ein NTC, KTY oder ein Widerstand aus Platin- oder einer Platinlegierung, z.B. ein Pt-100, verwendet werden.

Eine vorteilhafte Weiterbildung der Erfindung sieht vor, dass der Kunststoffkörper wenigstens eine Positionierausnehmung zum Positionieren des Temperatursensors in einem Motorgehäuse aufweist. Die Positionierausnehmung kann mit einem Vorsprung in einer entsprechenden Öffnung eines Motorgehäuses verrasten. Bevorzugt ist die Positionierausnehmung eine Einbuchtung, hat also in Richtung der Metallstäbe einen gerundeten Verlauf. Auf diese Weise kann der Temperatursensor in seiner vorgesehenen Position in einem Motorgehäuse in Richtung der Metallstäbe gegen eine Rückstellkraft verschoben werden. Vorteilhaft kann auf diese Weise erreicht werden, dass das vordere Ende des Temperatursensors mit dem Widerstandselement federnd an einem Bauteil des Motors anliegen kann. Auf diese Weise kann eine hervorragende thermische Ankopplung des Temperatursensors an den zu überwachenden Motor erreicht werden, so dass der Temperatursensor bei einer Temperaturerhöhung sehr schnell ansprechen kann.

Eine weitere vorteilhafte Weiterbildung der Erfindung sieht vor, dass der Kunststoffkörper wenigstens einen Durchbruch aufweist. Bevorzugt weist der Kunststoffkörper mehrere Durchbrüche auf, besonders bevorzugt ist, dass die Metallstäbe durch den Durchbruch oder die Durchbrüche hindurch verlaufen. Vorteilhaft kann auf diese Weise die Masse des Temperatursensors reduziert und somit dessen thermische Trägheit verringert werden. Indem die Metallstäbe durch den Durchbruch oder die Durchbrüche hindurch verlaufen, wird das Positionieren der Metallstäbe in einem Spritzgusswerkzeug zum Herstellen des Kunststoffkörpers wesentlich erleichtert, da die Spritzgussform an den Metallstäben anliegen und diese somit in einfacher Weise positionieren kann.

Mit Durchbrüchen des Kunststoffkörpers kann die Wärmekapazität des Temperatursensors vorteilhaft reduziert werden. Wenn die Metallstäbe durch Durchbrüche hindurch verlaufen kann bei manchen Anwendungen die Gefahr bestehen, dass Kondenswasser Nebenschlüsse verursacht und folglich die Temperaturmessung verfälscht. Für derartige Anwendungen ist bevorzugt, dass der Kunststoffkörper die Metallstäbe zwischen seinen Enden, aus denen die Metallstäbe herausragen, lückenlos bedeckt. Derartige Temperatursensoren können vorteilhaft mit einem Verfahren mit den im Anspruch 14 angegebenen Merkmalen hergestellt werden.

Um die Metallstäbe in zwei oder mehr Schritten zu umspritzen können Werkzeuge wie bei einem Mehrkomponenten-Spritzgussverfahren verwendet werden. Beispielsweise kann ein Werkzeugteil die beiden Metallstäbe an mehreren Stellen abstützen und diese so in der Spritzgussform fixieren. Nach einem ersten Spritzgussschritt werden dann das Werkzeugteil oder die Werkzeugteile, welche an den Metallstäben und diese dadurch fixieren zurückgezogen und dann in einem zweiten Spritzgussschritt die dadurch entstanden Freiräume gefüllt. Bevorzugt wird für beide Schritte dasselbe Material verwendet.

Weitere Einzelheiten und Vorteile der Erfindung werden an einem Ausführungsbeispiel unter Bezugnahme auf die beigefügten Zeichnungen erläutert. Es zeigen:
- Figur 1:: eine Schrägansicht eines Temperatursensors;
- Figur 2:: eine Seitenansicht des Temperatursensors;
- Figur 3:: eine um 90° gedrehte Seitenansicht zu Figur 2; und
- Figur 4:: eine Vorderansicht des Temperatursensors.

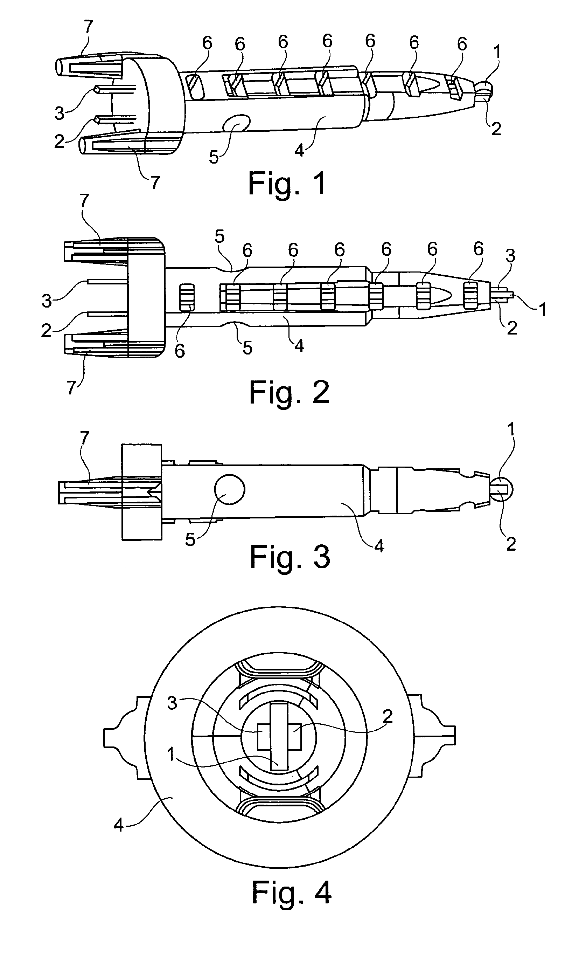

Der in den Figuren 1 bis 4 dargestellte Temperatursensor hat ein temperaturabhängiges Widerstandselement 1 in Form eines PTC-Elements, das zwischen zwei Metallstäben 2, 3 angeordnet ist, und einen Körper 4 aus Kunststoff, mit dem die beiden Metallstäbe 2, 3 umspritzt sind. Die Metallstäbe 2, 3 erstrecken sich von dem Widerstandselement aus und ragen jeweils mit ihren beiden Enden aus dem Kunststoffkörper 4 heraus. Das PTC-Element 1 ist deshalb außerhalb des Kunststoffkörpers 4 angeordnet.

Das PTC-Element 1 ist mit den beiden Metallstäben 2, 3 klemmend oder stoffschlüssig verbunden, beispielsweise verlötet oder mit einem leitfähigen Klebstoff verklebt. Zum Schutz vor schädlichen Umwelteinflüssen oder mechanischer Einwirkung kann das PTC-Element 1 zusammen mit den vorderen Enden der beiden Metallstäbe 2, 3 mit einer, bevorzugt mineralischen, Schutzmasse, beispielsweise Zement, beschichtet oder darin eingebettet sein.

Die Metallstäbe 2, 3 haben einen rechteckigen Querschnitt, also jeweils zwei Schmalseiten und zwei Breitseiten. Die Metallstäbe 2, 3 und liegen jeweils mit einer Breitseite flächig an dem plattenförmig ausgebildeten PTC-Element 1 an. Vorteilhaft kann auf diese Weise ein mechanisch belastbarer und zuverlässiger elektrischer Kontakt geschaffen werden.

Der Kunststoffkörper 4 hat zwei gegenüberliegende Positionierausnehmungen 5 zum Positionieren des Temperatursensors in einem Motorgehäuse. Die beiden Positionierausnehmungen 5 sind als Einbuchtungen ausgeführt, die in Richtung der Metallstäbe 2, 3 gerundet sind. Wird der Temperatursensor in eine dafür vorgesehene Öffnung eines Motorgehäuses eingesetzt, können Vorsprünge des Motorgehäuses in die Positionierausnehmungen 5 eingreifen, so dass der Kunststoffkörper 4 mit dem Motorgehäuse verrastet. Wegen der in Richtung der Metallstäbe 2, 3 gerundeten Form der Positionierausnehmungen 5 kann der Temperatursensor gegen Rückstellkraft in Richtung der Metallstäbe 2, 3 verschoben werden. Vorteilhaft kann das vordere Ende des Temperatursensors mit dem PTC-Element 1 deshalb federnd an einem Bauteil des zu schützenden Motors anliegen und mit diesem thermisch guten Kontakt haben. Bei einer kritischen Temperaturerhöhung des Motors kann der Temperatursensor deshalb vorteilhaft schnell ansprechen.

Der Kunststoffkörper 4 weist mehrere in einer Reihe angeordnete Durchbrüche 6 auf, die quer zur Längsrichtung der Metallstäbe 2, 3 verlaufen. Die Metallstäbe 2, 3 verlaufen durch die Durchbrüche 6 hindurch. Vorteilhaft werden durch die Durchbrüche 6 die Masse und damit die thermische Trägheit des Temperatursensors reduziert. Ein weiterer Vorteil der Durchbrüche 6 ist auch, dass die Metallstäbe 2, 3 in einem Spritzgusswerkzeug zum Herstellen des Kunststoffkörpers 4 leichter positioniert werden können. Indem nämlich die Spritzgussform an den Metallstäben 2, 3 anliegt, werden diese in der Spritzgussform positioniert und zugleich die Durchbrüche 6 erzeugt.

Der Kunststoffkörper 4 verjüngt sich zu dem PTC-Element 1 hin. Vorteilhaft kann dadurch die Masse des Temperatursensors weiter reduziert werden. Mechanische Beanspruchungen des Kunststoffkörpers 4 nehmen nämlich zu dem PTC-Element 1 hin ab.

An seinem hinteren Ende weist der Kunststoffkörper 4 zwei Positionierzapfen 7 auf, die sich parallel zu den dort austretenden Metallstäben 2, 3 erstrecken. Diese Positionierzapfen 7 können in passende Ausnehmungen einer Leiterplatte eingreifen, so dass die beiden Metallstäbe 2, 3 zum elektrischen Anschließen des Temperatursensors besonders einfach eine Steckverbindung mit einer Leiterplatte eingehen können. Bevorzugt verjüngen sich die Positionierzapfen 7 zu ihrem freien Ende hin. Auf diese Weise kann sich eine Leiterplatte beim Aufstecken auf die beiden Positionierzapfen 7 von selbst positionieren, so dass die beiden Metallstäbe 2, 3 in dafür vorgesehene Ausnehmungen der Leiterplatte oder eines Steckverbinders geführt werden können.

Die beiden Metallstäbe 2, 3 können kostengünstig als Blechstreifen ausgeführt sein. Bei dem dargestellten Ausführungsbeispiel weisen die beiden Metallstäbe 2, 3 in dem Kunststoffkörper 4 einen Knick oder eine Biegung auf, so dass die beiden hinten aus dem Kunststoffkörper 4 austretenden Enden der Metallstäbe 2, 3 voneinander einen größeren Abstand als die beiden vorderen Enden haben, zwischen denen das PTC-Element 1 angeordnet ist.

### Bezugszahlen

- 1: PTC-Element
- 2: Metallstab
- 3: Metallstab
- 4: Kunststoffkörper
- 5: Positionierausnehmung
- 6: Durchbruch
- 7: Positionierzapfen

## Patentansprüche

1. Temperatursensor mit einem temperaturabhängigen Widerstandselement (1), das zwischen den Enden von zwei Metallstäben (2, 3) gehalten ist, und einem Körper (4) aus Kunststoff, mit dem die beiden Metallstäbe (2, 3) umspritzt sind, **dadurch gekennzeichnet, dass** die Metallstäbe (2, 3) jeweils mit ihren beiden Enden aus dem Kunststoffkörper (4) herausragen.

2. Temperatursensor nach Anspruch 1, **dadurch gekennzeichnet, dass** der Kunststoffkörper (4) wenigstens einen Durchbruch (6) aufweist.

3. Temperatursensor nach Anspruch 2, **dadurch gekennzeichnet, dass** der Durchbruch (6) quer zur Längsrichtung der Metallstäbe (2, 3) verläuft.

4. Temperatursensor nach Anspruch 3, **dadurch gekennzeichnet, dass** die Metallstäbe (2, 3) durch den Durchbruch (6) hindurch verlaufen.

5. Temperatursensor nach einem der vorstehenden Ansprüche, **dadurch gekennzeichnet, dass** der Kunststoffkörper (4) die Metallstäbe (2, 3) zwischen seinen Enden, aus denen die Metallstäbe (2, 3) herausragen, lückenlos bedeckt.

6. Temperatursensor nach einem der vorstehenden Ansprüche, **dadurch gekennzeichnet, dass** der Kunststoffkörper (4) mehrere Durchbrüche (6) aufweist.

7. Temperatursensor nach einem der vorstehenden Ansprüche, **dadurch gekennzeichnet, dass** das Widerstandselement (1) stoffschlüssig mit den Metallstäben (2, 3) verbunden ist.

8. Temperatursensor nach einem der vorstehenden Ansprüche, **dadurch gekennzeichnet, dass** der Kunststoffkörper (4) wenigstens eine Positionierausnehmung (5) zum Positionieren des Temperatursensors in einem Motorgehäuse aufweist.

9. Temperatursensor nach Anspruch 8, **dadurch gekennzeichnet, dass** die Positionierausnehmung (5) eine Einbuchtung ist.

10. Temperatursensor nach einem der vorstehenden Ansprüche, **dadurch gekennzeichnet, dass** der Kunststoffkörper (4) wenigstens einen Positionierzapfen (7) aufweist, der sich an einem hinteren Ende des Kunststoffkörpers (4) parallel zu den dort austretenden Metallstäben (2, 3) erstreckt.

11. Temperatursensor nach einem der vorstehenden Ansprüche, **dadurch gekennzeichnet, dass** das Widerstandselement (1) von einer mineralischen Schutzmasse umschlossen ist.

12. Temperatursensor nach einem der vorstehenden Ansprüche, **dadurch gekennzeichnet, dass** sich der Kunststoffkörper (4) zu dem Widerstandselement (1) hin verjüngt.

13. Temperatursensor nach einem der vorstehenden Ansprüche, **dadurch gekennzeichnet, dass** die Metallstäbe (2, 3) einen rechteckigen Querschnitt haben und jeweils flächig mit einer Breitseite auf dem Widerstandselement (1) aufliegen.

14. Verfahren zum Herstellen eines Temperatursensors, wobei ein Widerstandselement (1) zwischen den Enden von zwei Metallstäben (2, 3) angeordnet und an den Enden der Metallstäbe (2, 3) befestigt wird, und die beiden Metallstäbe (2, 3) mit einem Kunststoffkörper (4) umspritzt werden, so dass ihre beiden Enden jeweils aus dem Kunststoffkörper hinausragen, **dadurch gekennzeichnet, dass** die Metallstäbe (2, 3) zur Herstellung des Kunststoffkörpers (4) in zwei oder mehr Schritten umspritzt werden.
